# FASCICULE DE BREVET EUROPEEN

(11) **EP 0 494 811 B1**
(45) Date de publication et mention de la délivrance du brevet: **11.10.1995**
(21) Numéro de dépôt: 92400020.1
(22) Date de dépôt: 06.01.1992
(51) Int. Cl.: F16K 31/04, F16K 31/02

(54) **Mécanisme de fermeture d'un réservoir pressurisé pour stockage de très longue durée et d'ouverture à distance de ce réservoir**
Absperrvorrichtung für Druckbehälter zur Langzeitspeicherung und fernbetätigbare Öffnung dieses Behälters
Remote opening and closing device for a pressurised container for long-term storage

(30) Priorité: 07.01.1991 FR 9100120
(43) Date de publication de la demande: 15.07.1992
(73) Titulaire: AEROSPATIALE Société Nationale Industrielle, 75781 Paris Cédex 16 (FR)
(72) Inventeur: Claramonte, Manuel, F-92370 Chaville (FR); Bonnet, Guy, F-78250 Hardricourt (FR)
(74) Mandataire: Dubois-Chabert, Guy

(56) Documents cités:
- DE-A- 3 700 623
- FR-A- 1 250 550
- FR-A- 1 292 002
- GB-A- 2 188 705
- US-A- 3 008 479
- US-A- 3 140 852

## Description

L'invention se rapporte à un mécanisme de fermeture d'un réservoir pressurisé et d'ouverture à distance de ce réservoir. Ce mécanisme permet de conserver un fluide sous haute pression et de commander à distance l'ouverture de ce réservoir, après un stockage de très longue durée, voire plusieurs dizaines d'années, avec une perte de pression minimale qui est celle naturellement liée à la perméabilité du matériau choisi pour fabriquer le réservoir.

Le mécanisme d'ouverture selon l'invention est particulièrement bien adapté aux applications aéronautique et spatiale.

Pour la fermeture et l'ouverture d'un réservoir sous très haute pression (typiquement de l'ordre de 0,5 à 50 MPa) différentes solutions ont été envisagées jusqu'à ce jour, telles que les mécanismes à base de joints et les pyromécanismes.

Les mécanismes de fermeture et d'ouverture à base de joints présentent l'inconvénient d'une durée de vie relativement courte quine dépasse pas 6 ans. D'autre part, les matériaux de joints présentent l'inconvénient d'être relativement perméable. Ainsi, il est difficile de garantir des durées de stockage très longues avec de tels mécanismes.

La solution de joints métalliques est très satisfaisante en tant que joints fixes mais les efforts d'écrasement nécessaires à l'obturation étanche d'un réservoir étant très importants, le mécanisme d'une commande d'ouverture à distance doit mettre en jeu des efforts du même ordre, ce qui implique des contraintes de dimensionnement lorsque le volume disponible est très réduit. C'est la raison pour laquelle lorsque l'on veut stocker pendant une longue durée un gaz sous haute pression et que l'on veut commander à distance un mécanisme d'ouverture du réservoir de stockage et que d'autre part on ne dispose que d'un faible volume, on fait appel à des vannes pyrotechniques. Ces pyromécanismes permettent en effet de concentrer une grande énergie dans un faible volume.

Malheureusement, ces vannes pyrotechniques présentent un certain nombre d'inconvénients. En effet :
- la durée de vie d'une vanne pyrotechnique est limitée et n'est garantie que 7 ans ;
- les vannes pyrotechniques présentent une sensibilité aux parasites électromagnétiques, ce qui impose de prendre des précautions particulières ;
- le domaine de températures admissibles d'une vanne pyrotechnique est souvent trop faible pour certaines applications ;
- les essais fonctionnels sont destructifs, ce quine permet pas de tester le dispositif ; il faut donc appréhender statistiquement la conformité des performances de ces vannes en procédant à des essais destructifs par prélèvement de certaines d'entre elles dans des lots de fabrication, ce qui entraîne des coûts élevés ;
- les vannes pyrotechniques produisent des gaz de combustion à très haute température et sous forte pression, généralement toxiques, qui peuvent s'échapper soit vers l'intérieur, soit vers l'extérieur du pyromécanisme et polluer ainsi l'environnement ;
- les manipulations des dispositifs pyrotechniques sont soumises à une réglementation de sécurité, qui exige par conséquent un personnel spécialisé artificier et un stockage dans des zones de sécurité normalisées pour les appareils qui en sont équipés, ce qui alourdit et rend sensiblement l'utilisation de ce matériel plus coûteux ;
- certaines vannes pyrotechniques bien qu'assurant avantageusement une étanchéité sans mécanisme à base de joints ne peuvent malheureusement pas dépasser un diamètre d'orifice de l'ordre de 6 mm pour des raisons de limite technologique ;
- les vannes pyrotechniques engendrent des chocs mécaniques lors de leur allumage, qui se propagent dans les structures mécaniques voisines et qui risquent de les endommager ;
- lorsqu'une redondance est nécessaire, les vannes pyrotechniques d'initiation doivent être doublées, ce qui complique notablement la géométrie du mécanisme d'ouverture et pénalise à la fois son poids et son encombrement.

Par le document US-A-3008479 est connu un mécanisme d'ouverture à distance d'un réservoir comportant un orifice obturé, d'une conception telle que son essai fonctionnel est destructif.

La présente invention a justement pour objet un mécanisme de fermeture d'un réservoir pressurisé et d'ouverture à distance de ce réservoir, pour le stockage d'un fluide pendant une très longue durée, permettant de remédier aux différents inconvénients ci-dessus. En particulier, l'invention permet de supprimer la production de chocs, la libération de gaz de combustion, la sensibilité aux ondes électromagnétiques, à la température et à la pression de l'environnement, de réduire l'encombrement et le prix du mécanisme ainsi que d'augmenter sa durée de vie, son domaine d'application, sa fiabilité, son efficacité, etc.

Dans la définition la plus large de l'invention, il est proposé un mécanisme d'ouverture à distance d'un réservoir comportant un orifice obturé, ce mécanisme comportant :
- un vérin thermique comprenant un corps pourvu d'un axe de symétrie et d'un évidement, un matériau fusible logé dans ledit évidement, ayant une température de changement de phase solide-liquide choisie de sorte qu'elle soit supérieure à la température maximale de l'environnement que doit supporter le dispositif, et une tige apte à se déplacer axialement hors du corps et se terminant par une pointe de perforation, cette tige étant en contact mécanique avec le matériau de sorte qu'une augmentation importante déterminée du volume du matériau entraîne le déplacement de la tige,
- des moyens de montage pour le montage du vérin thermique en regard du réservoir de sorte que la pointe soit située en regard de l'orifice,
- des moyens de chauffage montés à proximité du vérin et dont un actionnement a pour effet de chauffer le matériau au-dessus de la température de changement de phase, le passage de l'état solide à l'état liquide entraînant ladite augmentation de volume du matériau et par conséquent le déplacement de la tige.

Le dispositif de l'invention est actionné volontairement par un opérateur par commande des moyens de chauffage pour que ces derniers chauffent le matériau fusible au-dessus de sa température de changement de phase.

Dans ce vérin thermique, la transformation d'énergie thermique en énergie mécanique est obtenue, dans la course efficace de la pointe de perforation, par le changement de phase du matériau fusible, contenu dans le corps du vérin, entraînant une augmentation importante du volume du matériau. Ce matériau est en particulier une cire (paraffine) dont la composition permet d'ajuster la plage de températures utiles au déplacement de la tige, correspondant au changement de phase.

Le changement de phase du matériau s'accompagne d'une brusque variation de son volume sur une faible plage de température, entraînant une perforation rapide et franche de l'obturation de l'orifice par la pointe. La plage utile de températures de changement de phase est de l'ordre de 10°C avec des bornes de températures maximale Tmax et minimale Tmin contrôlées à ±1°C.

Au-delà et en-deçà de cette plage utile de températures de changement de phase, les déplacements de la pointe sont trop faibles pour que la pointe perfore l'obturateur du réservoir et sont uniquement tributaires du coefficient de dilatation du matériau fusible, soit en phase solide, soit en phase liquide ; ceci permet de s'affranchir des effets de la température ambiante (à condition d'avoir correctement choisi la température de fonctionnement du vérin). Le dispositif de l'invention est donc insensible aux variations de température de l'environnement.

Il est clair qu'un vérin thermique est un mécanisme particulièrement simple, fiable, peu encombrant et peu coûteux. De plus, le déplacement de la pointe n'entraîne pas de risque de pollution par des gaz de combustion et les essais fonctionnels ne sont pas destructifs. On peut en effet effectuer des contrôles métrologiques précis directement sur l'exemplaire opérationnel, tels que la loi course/déplacement de la pointe en fonction de la température et vérifier la compatibilité de cette loi avec les tolérances.

Par ailleurs, le vérin peut effectuer des milliers de cycles sans dommage, ce qui constitue une marge de fiabilité considérable pour un mécanisme qui ne fonctionne opérationnellement qu'une fois pour provoquer la rupture de l'obturateur plus quelques fois au cours des contrôles.

L'élévation de température et donc le changement de phase du matériau fusible sont obtenus par effet joule d'un courant électrique en utilisant avantageusement une ou plusieurs thermistances à coefficient de température positif. Ce type de thermistance permet une régulation automatique de la température de chauffe du matériau sur la valeur maximale de température Tmax de la plage de changement de phase du matériau fusible.

Les thermistances à coefficient de température positif, appelées ci-après élément TCP, présentent la particularité essentielle d'avoir une résistance ohmique presque constante tant que la température propre de l'élément TCP se trouve à une température inférieure à une valeur seuil ; ceci permet de déterminer l'intensité électrique de l'alimentation pour une tension déterminée. A l'inverse, lorsque la température seuil est atteinte, la résistance ohmique croît très rapidement avec la température ; il en résulte alors que, pratiquement, la température se stabilise automatiquement à cette valeur de seuil, appelée température de stabilisation.

Les éléments TCP sont fiables et délivrent des températures très précises à ±1°C.

Cette solution de chauffage constitue une protection efficace et très fiable à bon marché contre le risque d'une élévation de température supérieure au seuil et également contre le risque d'une surconsommation d'énergie électrique par court-circuit.

De plus, la durée de vie de ces éléments TCP n'est pas limitée et ces éléments sont très compacts. Ils peuvent être mis en redondance, sans augmentation notable ni du poids ni de l'encombrement du mécanisme.

En fonction de la température maximale d'environnement que doit supporter le dispositif, on choisit un élément TCP qui a une température de stabilisation légèrement supérieure à celle de l'environnement (5 à 10°C) et on règle la composition du matériau pour que son changement de phase se produise à cette température.

Sur l'ensemble monté, on peut en outre, contrôler non seulement la continuité du circuit électrique passant par le ou les éléments de chauffage TCP mais chauffer la cire jusqu'à une température proche de la valeur de la température minimale de la plage utile (de changement de phase), à condition d'avoir une mesure de température sur le corps du vérin.

Le mécanisme d'ouverture de l'invention permet un allègement de l'électronique d'asservissement, augmentant ainsi sa fiabilité, du fait que le courant de chauffage s'annule pratiquement dès que la température de régulation est atteinte.

Par ailleurs, la consommation électrique n'est que de quelques centaines de milliampères contre plusieurs ampères pour une vanne pyrotechnique.

Dans le mécanisme de l'invention d'ouverture du réservoir, l'effort disponible au niveau du vérin thermique est plusieurs fois supérieur au besoin strictement nécessaire à la rupture de l'opercule.

L'invention a encore pour objet un mécanisme de fermeture d'un réservoir renfermant un fluide sous pression, destiné à être libéré par un orifice, et d'ouverture à distance de ce réservoir, se caractérisant en ce qu'il comprend :
- un opercule métallique soudé au réservoir pour obturer l'orifice,
- un mécanisme d'ouverture à distance du réservoir tel que décrit précédemment, et
- une canalisation d'évacuation du fluide libéré.

Le mécanisme d'obturation selon l'invention d'un réservoir sous pression permet avantageusement de conserver un gaz sous pression en garantissant le maximum d'étanchéité, toute chose égale par ailleurs. Grâce au scellement du réservoir à l'aide d'un opercule soudé directement en sortie du réservoir, le niveau de pression à l'intérieur du réservoir n'est pratiquement pas limité.

De plus, le diamètre de l'orifice et donc celui de l'opercule n'est pas contraint par une limite technologique propre au mécanisme lui-même. En outre, le remplissage du réservoir peut être effectué soit avant soudage de l'opercule, ce qui implique de réaliser la soudure à l'intérieur d'une enceinte à la pression de remplissage du réservoir, soit après soudage de l'opercule par l'intermédiaire d'un orifice auxiliaire qui peut être fermé, mais non démontable, selon une technique classique qui garantit le niveau d'étanchéité désiré (queusot, joint métallique fixe, ...).

Ce système, contrairement à une vanne pyrotechnique, présente une durée de vie de 10 ans et plus. Par ailleurs, les risques de pollution sont nuls car il n'y a pas de production de produits toxiques comme dans les vannes pyrotechniques. Toutefois, les débris résultant de la rupture de l'opercule doivent être piégés. Ceci est relativement aisé à obtenir du fait que la sortie du gaz du mécanisme ne peut se faire selon l'axe de l'orifice en raison de la présence du vérin thermique et notamment de la tige.

La canalisation d'évacuation du fluide est disposée dans la zone de l'orifice et est orientée perpendiculairement à la pointe de perforation. Le coude formé entre la canalisation et la zone de l'orifice est naturellement exploité pour récupérer et piéger les plus gros morceaux de l'opercule. Pour arrêter les particules métalliques les plus fines qui sont entraînées avec l'écoulement du fluide, on utilise avantageusement un filtre logé dans la canalisation d'évacuation.

L'effort que peut délivrer le vérin thermique peut être dimensionné, sans conséquence notable sur la masse et sur l'encombrement du mécanisme, dans un rapport de l'ordre de 10 relativement à l'effort nécessaire à la pointe pour déclencher la rupture de l'opercule ; ceci donne encore des marges de sécurité sur le dimensionnement de l'opercule lui-même et donc sur la fiabilité du mécanisme.

Par ailleurs, le diamètre de l'orifice de sortie des gaz du réservoir n'est théoriquement pas limité contrairement à ceux de certaines vannes pyrotechniques. Ainsi, la masse et l'encombrement du mécanisme de l'invention ne sont pas notablemnt affectés par le diamètre de l'orifice de l'opercule à ouvrir, ce qui augmente le champ d'application du mécanisme de l'invention par rapport à celui des vannes pyrotechniques.

La comparaison du mécanisme d'ouverture de l'invention avec une vanne pyrotechnique fait apparaître un grand nombre d'avantages de l'invention. Il existe toutefois une caractéristique qui rend l'invention inadaptée à des applications particulières. Cette caractéristique, qui est pratiquement la seule caractéristique d'inadaptation à certaines applications, est le délai de fonctionnement relativement long entre le temps de début de chauffage du vérin et la rupture de l'opercule.

Cette caractéristique est en effet incontournable car elle est liée au phénomène d'inertie thermique. Il faut donc que l'utilisateur puisse programmer une séquence qui autorise d'anticiper la commande du chauffage quelques dizaines de secondes avant la rupture de l'opercule et que l'instant de la rupture puisse aussi avoir des tolérances assez larges, de quelques secondes ; c'est le plus souvent d'ailleurs le cas car de toutes les façons, il faut aussi un certain temps pour que le gaz libéré du réservoir remplisse les canalisations avant de l'utiliser. Par conséquent, on peut aussi très bien anticiper de quelques secondes supplémentaires la commande du chauffage. Il y a cependant des cas où ce délai est inacceptable, tel par exemple une application dans un système de sécurité où on ne peut pas programmer le fonctionnement à l'avance, la vanne pyrotechnique est la solution la mieux adaptée dans ce cas.

D'autres caractéristiques et avantages de l'invention ressortiront mieux de la description qui va suivre, donnée à titre illustratif et non limitatif, en référence aux figures annexées dans lesquelles :
- la figure 1 représente en coupe longitudinale un mécanisme de fermeture et d'ouverture d'un réservoir pressurisé, conforme à l'invention,
- la figure 2 donne les variations du déplacement (D) de la pointe du vérin en fonction de la température (T) ; et
- la figure 3 donne les variations de la résistance (R) d'un élément TCP en fonction de la température (T).

Le mécanisme de l'invention peut s'appliquer à n'importe quel type de réservoir, de forme quelconque renfermant un fluide sous très haute pression et plus particulièrement un gaz. Ce réservoir peut être réalisé en n'importe quel matériau et présenter une forme quelconque.

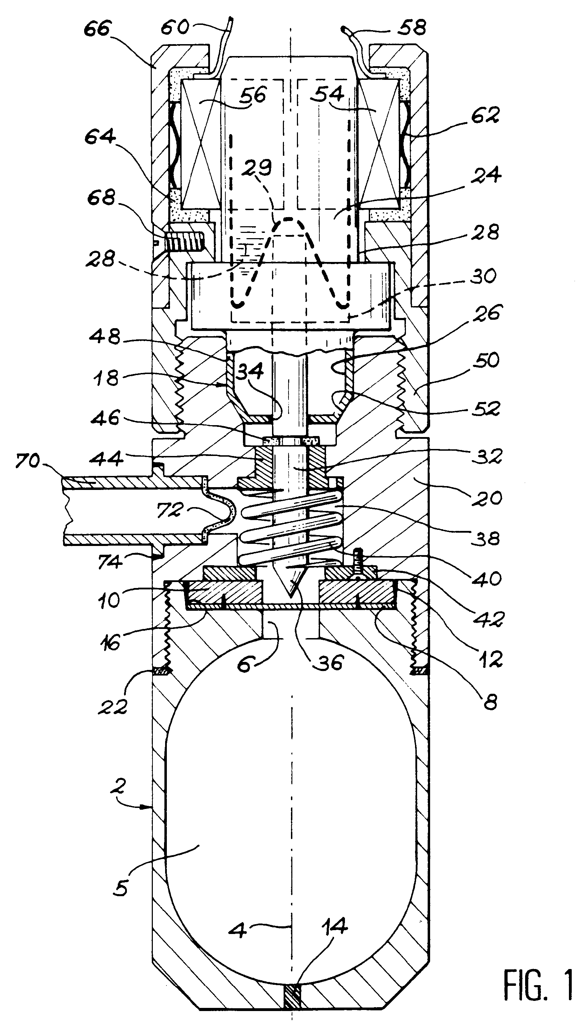

Pour décrire les principaux éléments qui composent les mécanismes de l'invention, on a représenté, sur la figure 1, un réservoir cylindrique 2 comportant un axe de révolution 4 et un orifice de sortie 6 orienté selon l'axe 4 du réservoir. Ce réservoir 2 est obturé et renferme un gaz 5 sous très haute pression.

Le mécanisme de l'invention commence à l'opercule 8 obturant l'orifice 6 du réservoir.

Cet opercule est métallique et est fixé sur une pièce annulaire 10 métallique par quelques points de soudure, cette pièce 10 étant elle-même soudée sur le réservoir 2 à l'aide d'une soudure 12. Cette soudure circulaire 12 doit être parfaitement étanche.

Aujourd'hui, les techniques de soudure sont très bien maîtrisées par les spécialistes, et l'obtention de soudures étanches ne pose pas de problème.

Pour assurer le maintien de la pièce annulaire 10, l'enveloppe du réservoir comporte à cet effet un logement cylindrique 16 dont l'axe de révolution est confondu avec l'axe 4 du réservoir.

L'opercule se trouve donc pris en sandwich entre l'enveloppe du réservoir et la pièce 10 et est enfermé dans le logement 16.

L'utilisation d'une pièce annulaire 10 permet de reporter la soudure d'étanchéité 12 du réservoir sur un cercle assez éloigné de la zone de l'orifice.

Cette précaution permet de ne pas altérer, par des effets thermiques dus au soudage les propriétés du matériau de l'opercule, dans la zone de l'orifice où les contraintes sont maximales.

Tel qu'il est représenté sur la figure, le scellement du réservoir 2 est implicitement supposé réalisé dans un caisson qui contient lui-même le gaz 5 à la même pression que celle que l'on veut obtenir dans le réservoir. Cette solution permet de faire un ensemble plus compact mais nécessite un moyen de soudage approprié.

On peut imaginer, en particulier, sans que cela change l'invention, que ce même opercule 8 soit soudé à l'air libre et que par un second orifice 14 du réservoir, on réalise la mise en pression. Dans cette configuration, on ferme le réservoir après remplissage de façon étanche et définitive par un procédé classique tel que le queusotage ou par tout autre procédé.

Il faut remarquer aussi que la pièce annulaire 10 a une épaisseur qui permet de réaliser une soudure dont la profondeur garantit, outre l'étanchéité, la tenue mécanique de l'opercule 8.

Quel que soit le mode de fermeture et d'étanchéité de ce mécanisme de fermeture du réservoir, cet ensemble peut être testé à l'hélium avec une très grande précision pour vérifier son étanchéité. La perte de pression du gaz 5 doit être minimale et être celle naturellement liée à la perméabilité du matériau choisi pour fabriquer le réservoir 2. Ce dernier peut être réalisé en acier ou en matériau composite. La durée du stockage du gaz 5 doit être très longue, voire de plusieurs dizaines d'années.

Le mécanisme d'ouverture à distance du réservoir 2 est représenté au repos sur la figure. Il comprend un vérin thermique 18, constituant un sous-ensemble qui peut être testé séparément puis monté, sans appareillage particulier, sur le réservoir 2 au moyen d'une pièce 20 vissée sur le réservoir 2. La pièce 20 à symétrie de révolution assure le centrage du vérin par rapport à l'orifice 6. Un joint fixe annulaire 22 en métal assure l'étanchéité entre la pièce 20 et le réservoir en fond de vissage.

Il faut noter que ce joint 22 ne participe pas à l'étanchéité du réservoir tant que l'opercule 8 n'a pas été perforé et n'influe donc en aucun cas sur la durée de stockage du gaz dans le réservoir.

Le vérin 18 comporte un corps métallique 24 comportant un évidement 26 rempli d'une cire fusible 28 (paraffine par exemple) présentant une plage de température de changement de phase, passage de l'état solide à l'état liquide, de l'ordre de 10°C. La cire est contenue dans une enveloppe déformable étanche 29. Le seuil de température de changement de phase de la cire est liée à sa composition et est fonction de la température de l'environnement.

Le vérin 18 comporte en outre un doigt en caoutchouc 30 qui plonge dans le corps 24 et pince une tige cylindrique 32 apte à se déplacer dans l'évidement 26. Ce doigt 30 est apte à expulser la tige 32 du vérin selon l'axe 4 lors de l'augmentation de volume de la cire 28. A cet effet, un orifice de sortie 34 est pratiqué en tête du corps 24 et est axé sur l'axe 4. Cette tige 32 se termine par une pointe 36 de section triangulaire réalisée en métal très dur ; elle est destinée à déclencher la rupture de l'opercule 8 et lui fait donc face.

L'expansion importante du volume de la cire lors de son passage de l'état solide à l'état liquide entraîne, via le doigt 30, un déplacement axial de la tige 32 équipée de sa pointe 36.

La rupture de l'opercule 8 est provoquée en créant une concentration de contrainte dans le matériau le constituant, lorsque la pointe 36 est appliquée au centre de l'opercule 8. Un effort relativement faible de quelques dizaine de newtons est suffisant pour déclencher la rupture de l'opercule du fait des contraintes engendrées dans l'opercule par la pression du gaz 5 sur la face opposée de l'opercule.

L'une des particularités de l'invention consiste justement à utiliser l'énergie du gaz sous haute pression contenu dans le réservoir pour minimiser l'énergie à fournir par le mécanisme pour commander et provoquer l'ouverture du réservoir. Ainsi, les dimensions et la masse du mécanisme peuvent être rendues minimales.

La pièce mécanique 20 comporte, en regard de l'opercule, un évidement 38 dans lequel s'effectue le déplacement de la tige 32. Cet évidement, par exemple de forme cylindrique, présente un diamètre interne supérieur à celui de la tige 32 ; il définit une chambre étanche dont une extrémité est fermée par le vérin et l'autre extrémité par l'opercule, lorsque celui-ci est en place.

Un ressort de rappel 40 est enroulé sur la tige 32 du vérin et logé dans la chambre 38 de la pièce de maintien 20. Ce ressort 40 est destiné à ramener la tige 32 dans sa position initiale (position représentée sur la figure), lorsque la température de la cire 28 diminue, après être montée à la température de changement de phase, c'est-à-dire après l'actionnement du vérin.

Ce ressort de rappel 40 s'appuie, d'un côté sur une rondelle d'appui 42 fixée sur la pièce mécanique 20 et de l'autre côté sur la tige 32 du vérin par l'intermédiaire d'une bague 44 comportant un alésage pour le passage de la tige 32 ; cette bague 44 est rendue solidaire de la tige à l'aide d'un anneau élastique 46.

Ce ressort peut être soit un ressort hélicoïdal soit un ressort réalisé avec des rondelles Belleville qui permet selon l'usage de disposer d'une plus grande raideur : on a représenté sur la figure un ressort hélicoïdal.

L'effet du ressort 40 se conjugue à la pression du gaz s'échappant de l'orifice 6 ouvert pour faire revenir la pointe à sa position initiale.

Le corps 24 du vérin 18 est monté dans un évidement axial 48 de la pièce 20 et est fixé à cette dernière à l'aide d'un écrou 50. L'étanchéité entre la pièce 20 et le corps 24 du vérin est assurée par une portée conique 52 entre la pièce 20 et la tête du vérin 18.

Des éléments de chauffage 54 et 56 sont prévus à l'extérieur du corps 24 pour assurer le chauffage de la cire 28. Ces éléments consistent en deux thermistances à coefficient de température positif (TCP), en forme de deux demi-cylindres disposés en regard et entourant le corps 24. Ces éléments 54 et 56 peuvent être électriquement indépendants et reliés à une source d'alimentation électrique (non représentée) via respectivement des fils électriques 58 et 60.

Le fonctionnement d'un seul demi-cylindre TCP est suffisant pour élever la température de la cire 28 à la température de changement de phase. Toutefois, l'utilisation de deux thermistances en redondance permet de compenser la défaillance éventuelle de l'un des éléments de chauffage, lors de leur actionnement, et de ne pas compromettre le fonctionnement du vérin.

Les éléments de chauffage 54 et 56 sont maintenus au contact du corps 24 par l'intermédiaire d'un ressort 62 et de cales 64, en isolant électrique et thermique ; cet ensemble est logé dans un conteneur cylindrique 66 en matériau isolant électrique et thermique (par exemple en tétrafluoroéthylène). Ce conteneur 66 est fixé sur l'écrou 50 à l'aide de vis 68.

Sur la pièce mécanique 20 est montée une canalisation d'évacuation 70 du gaz. Cette canalisation 70 est montée radialement sur la pièce 20 en regard de la chambre 38 qui assure la mise en communication du réservoir 2 et de la canalisation 70 lors de l'ouverture du réservoir.

Le coude formé entre l'orifice 6 et la canalisation 70 assure, lorsque l'opercule 8 est percé, la récupération des grosses particules de débris de l'opercule, celles-ci étant piégées dans la chambre 38 étanche en cul de sac. Un filtre 72 pour retenir les plus fins débris de l'opercule est prévu à l'entrée de la canalisation 70.

L'étanchéité entre la canalisation 70 et la pièce 20 est assurée par une soudure étanche 74.

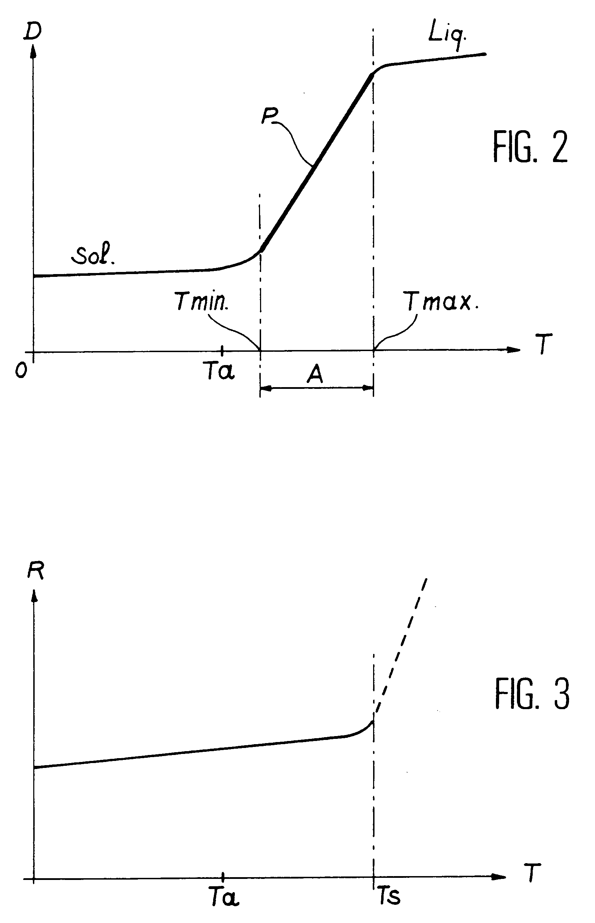

Sur la figure 2, on a représenté les variations du déplacement D de la tige du vérin en fonction de la température T de chauffage de la cire. La référence A indique la plage utile de changement de phase de la cire avec les bornes de température minimale Tmin et maximale Tmax. Ces températures sont supérieures à la température de l'environnement Ta et fonction de la composition de la cire.

Le changement de phase de la cire s'accompagne d'une brusque et importante variation de son volume, entraînant un brusque déplacement de la tige du vérin symbolisé par le brusque changement de pente P de la courbe de la figure 2. En-deçà de la température Tmin de seuil de changement de phase, température en-dessous de laquelle la cire est solide, et au-delà de la température Tmax, au-dessus de laquelle la cire est liquide, les déplacements de la pointe sont très faibles (pente quasi nulle de la courbe de la figure 2) et uniquement tributaires des dilatations de la cire respectivement à l'état solide et à l'état liquide.

Sur la figure 3,on a représenté les variations de la résistance R d'un élément TCP en fonction de la température T. Ts indique la température seuil ou de stabilisation des éléments TCP. En-dessous de la température Ts, la résistance R ne varie pratiquement pas avec la température. A l'inverse, au-dessus de la température Ts, la résistance R croît très rapidement avec la température. Ts est choisi dans la plage utile.

Le mécanisme de l'invention décrit ci-dessus permet donc l'ouverture d'un réservoir à distance de façon originale, fermé au préalable par un simple opercule soudé.

Les différents éléments composant le mécanisme de l'invention ont été représentés à symétrie de révolution. Il est clair que d'autres formes peuvent être envisagées telles que des formes parallélépipédiques sans pour autant sortir du cadre de l'invention, telle que définie par les revendications.

## Revendications

1. Mécanisme d'ouverture à distance d'un réservoir (2) comportant un orifice (6) obturé, comportant :
- un vérin thermique (18) comprenant un corps (4) pourvu d'un axe de symétrie et d'un évidement (26), un matériau fusible (28) logé dans ledit évidement, ayant une température de changement de phase solide-liquide choisie de sorte qu'elle soit supérieure à la température maximale d'environnement que doit supporter le dispositif, et une tige (32) dont une extrémité est engagée dans ledit évidement (26) apte à se déplacer axialement par rapport au corps (24), l'extrémité opposée se terminant par une pointe de perforation (36), cette tige (32) étant en contact mécanique (30) avec le matériau de sorte qu'une augmentation importante déterminée du volume du matériau entraîne le déplacement de la tige ;
- des moyens de montage (20) pour le montage du vérin thermique en regard du réservoir (2) de sorte que la pointe (36) soit située en regard de l'orifice (6) ;
- des moyens de chauffage (56, 54) montés à proximité du vérin et dont un actionnement a pour effet de chauffer le matériau au-dessus de la température de changement de phase, le passage de l'état solide à l'état liquide entraînant ladite augmentation de volume du matériau et par conséquent le déplacement de la tige.

2. Mécanisme selon la revendication 1, caractérisé en ce que le matériau (28) présente une plage de température de changement de phase dont les bornes supérieure et inférieure sont réglables.

3. Mécanisme selon la revendication 2, caractérisé en ce que la plage de température est de 10°C environ.

4. Mécanisme selon l'une quelconque des revendications 1 à 3, caractérisé en ce que le matériau est une cire.

5. Mécanisme selon l'une quelconque des revendications 1 à 4, caractérisé en ce qu'il comprend un ressort de rappel (40) prenant appui sur la tige du vérin pour ramener la pointe à son état initial lorsque l'actionnement cesse.

6. Mécanisme selon l'une quelconque des revendications 1 à 5, caractérisé en ce que les moyens de chauffage consistent en au moins une thermistance à coefficient de température positif.

7. Mécanisme selon l'une quelconque des revendications 1 à 6, caractérisé en ce que les moyens de chauffage comportent deux thermistances se présentant sous forme de deux demi-coquilles entourant le corps du vérin, des moyens élastiques étant prévus pour assurer le maintien des thermistances.

8. Mécanisme de fermeture d'un réservoir renfermant un fluide sous pression, destiné à être libéré par un orifice, et d'ouverture à distance de ce réservoir, caractérisé en ce qu'il comprend :
- un opercule métallique (8) soudé au réservoir et fermant ledit orifice,
- un mécanisme selon l'une quelconque des revendications 1 à 7, et
- une canalisation (70) d'évacuation du fluide libéré.

9. Mécanisme selon la revendication 8, caractérisé en ce que l'opercule (8) est soudé sur une pièce annulaire (10), elle-même soudée de façon étanche sur le réservoir.

10. Mécanisme selon la revendication 8 ou 9, caractérisé en ce que les moyens de montage (20) et le vérin thermique (18) définissent une chambre étanche (38) dans laquelle est apte à se déplacer la pointe d'obturation (36), cette chambre assurant la mise en communication du réservoir (2) et de la canalisation (70), lors de l'ouverture du réservoir.

11. Mécanisme selon la revendication 10, caractérisé en ce que la canalisation (70) est disposée en regard de la chambre et est orientée perpendiculairement à la tige (32).

12. Mécanisme selon l'une quelconque des revendications 8 à 11, caractérisé en ce qu'un filtre (72) est prévu dans la canalisation pour récupérer les débris de l'opercule lors de sa perforation.

## Patentansprüche

1. Fernbetätigbare Öffnungsvorrichtung eines Behälters (1) mit einer abgesperrten Öffnung (6), bestehend aus:
- einem Thermikzylinder (18) mit einem Gehäuse (4), das mit einer Symmetrieachse und einer Aussparung (26) versehen ist, wobei ein in der genannten Aussparung untergebrachtes schmelzbares Material (28) bei einer ausgewählten Temperatur aus dem festen in den flüssigen Aggregatzustand in der Weise übergeht, daß diese Temperatur über der Umgebungstemperatur liegt, die die Vorrichtung aushalten muß, sowie aus einer Stange (32), von der ein Ende in die genannte Aussparung (26) eingreift, wobei die Stange in der Lage ist, sich in axialer Richtung in bezug auf das Gehäuse (24) zu verschieben, während das gegenüberliegende Ende in eine Perforierungsspitze (36) ausläuft, wobei diese Stange (32) mit dem Material auf die Weise in mechanischem Kontakt (30) steht, das durch eine vorgegebene, beträchtliche Vergrößerung des Materialvolumens die Verschiebung der Stange bewirkt wird;
- Montagevorrichtungen (20) für die Befestigung des Thermikzylinders gegenüber des Behälters (2), so daß die Spitze (36) gegenüber der Öffnung (6) plaziert ist;
- Heizvorrichtungen (56, 54), die in der Nähe des Zylinders montiert sind, und deren Betätigung zur Folge hat, daß das Material auf eine Temperatur erwärmt wird, die über der Temperatur der Aggregatzustandsänderung liegt, wobei der Übergang vom festen zum flüssigen Aggregatzustand die genannte Volumenvergrößerung des Materials und damit auch die Verschiebung der Stange bewirkt.

2. Mechanismus nach Anspruch 1, dadurch gekennzeichnet, daß das Material (28) einen Temperaturbereich der Aggregatzustandsänderung aufweist, dessen obere und untere Grenze regulierbar ist.

3. Mechanismus nach Anspruch 2, dadurch gekennzeichnet, daß der Temperaturbereich etwa 10°C beträgt.

4. Mechanismus nach einem der Ansprüche 1 bis 3, dadurch gekennzeichnet, daß das Material ein Wachs ist.

5. Mechanismus nach einem der Ansprüche 1 bis 4, dadurch gekennzeichnet, daß dieser eine Rückstellfeder besitzt (40), die an der Stange des Zylinders anliegt, um die Spitze in ihren ursprünglichen Zustand zurückzuversetzen, sobald die Betätigung nicht mehr erfolgt.

6. Mechanismus nach einem der Ansprüche 1 bis 5, dadurch gekennzeichnet, daß die Heizvorrichtungen aus mindestens einem Thermistor mit positiven Temperaturkoeffizienten bestehen.

7. Mechanismus nach einem der Ansprüche 1 bis 6, dadurch gekennzeichnet, daß die Heizvorrichtungen zwei Thermistoren, die die Form von zwei Halbschalen aufweisen, welche das Gehäuse des Zylinders umschließen, und elastische Vorrichtungen enthalten, die die Halterung der Thermistoren absichern.

8. Absperrmechanismus für einen Behälter mit einer unter Druck stehenden Flüssigkeit, die dazu bestimmt ist, durch eine Öffnung freigegeben zu werden, und mit einer fernbetätigbaren Öffnung dieses Behälters, dadurch gekennzeichnet, daß dieser folgendes umfaßt:
- eine Schieberplatte aus Metall (8), die am Behälter angeschweißt ist und die genannte Öffnung verschließt;
- einen Mechanismus nach einem der Ansprüche 1 bis 7, und
- eine Entleerungsrohrleitung (70) für die freigegebene Flüssigkeit.

9. Mechanismus nach Anspruch 8, dadurch gekennzeichnet, daß die Schieberplatte (8) an einem ringförmigen Teil (10) angeschweißt ist, wobei dieses Teil wiederum an den Behälter dicht angeschweißt ist.

10. Mechanismus nach Anspruch 8 oder 9, dadurch gekennzeichnet, daß die Montagevorrichtungen (20) und der Thermikzylinder (18) eine dichte Kammer (38) bilden, in der sich die Drosselspitze (36) verschieben kann, wobei diese Kammer die Kopplung des Behälters (2) mit der Rohrleitung (70) beim Öffnen des Behälters gewährleistet.

11. Mechanismus nach Anspruch 10, dadurch gekennzeichnet, daß die Rohrleitung (70) gegenüber der Kammer angeordnet und senkrecht zu der Stange (32) ausgerichtet ist.

12. Mechanismus nach einem der Ansprüche 8 bis 11, dadurch gekennzeichnet, daß in der Rohrleitung ein Filter (72) angebracht ist, um die Abfallstücke der Schieberplatte aufzufangen, wenn diese durchlöchert wird.

## Claims

1. A mechanism for remotely opening a container (2) comprising a closed orifice (6), comprising:
- a thermal jack (18) comprising a body (4) provided with an axis of symmetry and a recess (26), a fusible material (28) housed in the said recess, having a solid-liquid phase changing temperature selected so that it is greater than the maximum temperature of the environment to which the device must be subjected, and a rod (32) of which one end is engaged in the said recess (26) able to move axially with respect to the body (24), the opposite end terminating in a perforation point (36), this rod (32) being in mechanical contact (30) with the material so that a significant, predetermined increase in the volume of the material causes the rod to be displaced;
- mounting means (20) for mounting the thermal jack facing the container (2) so that the point (36) is located facing the orifice (6);
- heating means (56, 54) mounted in the proximity of the jack and actuation of which has the effect of heating the material above the phase changing temperature, the transition from the solid state to the liquid state causing the said increase in volume of the material and consequently the displacement of the rod.

2. Mechanism according to claim 1, characterised in that the material (28) has a phase changing temperature range of which the upper and lower limits can be regulated.

3. Mechanism according to claim 2, characterised in that the temperature range is of about 10°C.

4. Mechanism according to any of claims 1 to 3, characterised in that the material is a wax.

5. Mechanism according to any of claims 1 to 4, characterised in that it comprises a return spring (40) bearing on the rod of the jack in order to return the point to its initial state when actuation ceases.

6. Mechanism according to any of claims 1 to 5, characterised in that the heating means consist of at least one thermistor with a positive temperature coefficient.

7. Mechanism according to any of claims 1 to 6, characterised in that the heating means comprise two thermistors in the form of two half shells surrounding the body of the jack, elastic means being provided to ensure the retention of the thermistors.

8. Mechanism for closing a container enclosing a pressurised fluid, intended to be released by means of an orifice, and for remotely opening this container, characterised in that it comprises:
- a metallic cap (8) welded to the container and closing the said orifice,
- a mechanism according to any of claims 1 to 7, and
- tubing (70) for evacuating the released fluid.

9. Mechanism according to claim 8, characterised in that the cap (8) is welded on an annular piece (10), which is itself welded in a sealed manner on the container.

10. Mechanism according to claim 8 or 9, characterised in that the mounting means (20) and the thermal jack (18) define a sealed chamber (38) in which the sealing point (36) is able to move, this chamber ensuring that the container (2) and the tubing (70) are brought into communication when the container is opened.

11. Mechanism according to claim 10, characterised in that the tubing (70) is disposed opposite the chamber and is orientated perpendicular to the rod (32).

12. Mechanism according to any of claims 8 to 11, characterised in that a filter (72) is provided in the tubing to recover the debris of the cap when it is perforated.
